# EUROPEAN PATENT APPLICATION

(11) **EP 1 314 968 A1**
(43) Date of publication of application: **28.05.2003**
(21) Application number: 02025485.0
(22) Date of filing: 15.11.2002
(51) Int. Cl.: G01F 25/00, G01F 23/68

(54) **System for indicating the level of fuel in a fuel tank**

(30) Priority: 21.11.2001 IT TO20011087
(71) Applicant: FIAT AUTO S.p.A., 10135 Torino (IT)
(72) Inventor: Ansaldi, Maurizio, I-10137 Torino (IT); Carignano, Massimo, I-10040 Rivalta Di Torino, (Torino) (IT); Tuninetti, Alessandro, 10156 Torino (IT)
(74) Representative: Quinterno, Giuseppe

(57) **Abstract**

The method permits the diagnosis of operating anomalies or failures of a system for indicating the level of the fuel (F) in a motor-vehicle tank (2). It comprises the steps of:
- detecting the impedance of a level sensor (6), by means of processing and control means (ECU), and comparing this impedance with predetermined threshold values in order to detect, by predetermined methods, a short-circuit or open-circuit condition of the wire or wiring harness (C) which connects the unit (ECU) to the level sensor,
- monitoring, by means of the processing and control means (ECU), the voltage supplied by the level sensor (6),
- detecting and storing the duration of the individual periods of time for which the voltage has a value outside a predefined range, and
- counting and storing, starting from a preset moment, the total number of periods, and the number of occasions on which the durations of the periods fall within each of a plurality of predetermined ranges of values.

## Description

The present invention relates to a method for the diagnosis of operating anomalies or failures in a system for indicating the level of the fuel in a motor-vehicle tank.

As systems for indicating fuel levels in motor-vehicle tanks have developed, they have become more and more complex, with the incorporation of mechanical, electrical and electronic components therein. Level-indicator systems which are quite complex may be subject "to operating anomalies or failures for a variety of reasons that are often difficult to discriminate unequivocally in view of the large number of potential chemical, mechanical and/or electrical factors which may give rise to the causes of a failure.

An object of the present invention is to enable operating anomalies or failures to be diagnosed as soon as they occur, possibly even before the user has noticed them, and without the need for sensors additional to those already present in the fuel-level indicator system.

These and other objects are achieved, according to the invention, by a diagnosis method the main characteristics of which are defined in appended Claim 1.

Further characteristics and advantages of the invention will become clear from the following detailed description, given purely by way of non-limiting example with reference to the appended drawing which shows, in the form of a block diagram, a fuel-level indicator system which can perform the diagnosis of anomalies or failures in accordance with the invention.

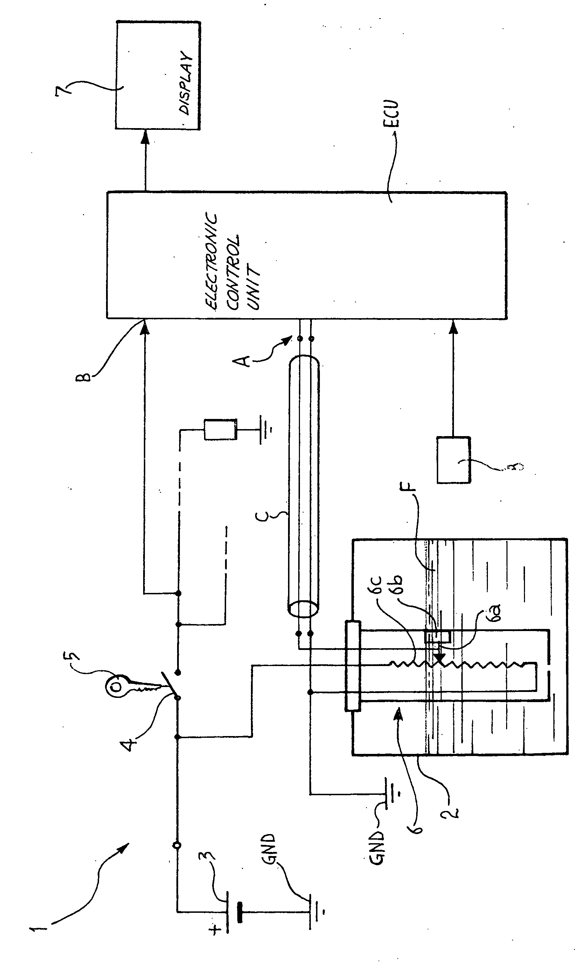

In Figure 1, a system for indicating the level or the quantity of fuel F in the tank 2 of a motor vehicle provided with an internal combustion engine (not shown), is generally indicated 1.

A storage battery provided in the motor vehicle is indicated 3. In the embodiment shown, the battery 3 has its negative terminal connected to the earth GND.

An electrical ignition and engine-starting switch, indicated 4, of the motor vehicle, is connected to the positive terminal of the battery 3 and can be operated manually by means of a key 5 or the like.

An electrical level sensor associated with the tank 2 in known manner, is indicated 6. The level sensor 6 shown is of the resistive type and comprises a slide 6a carried by a body 6b floating in the fuel F. The slide 6a can slide along a resistive element 6c which is electrically connected between the positive terminal of the battery 3 and the earth. The slide 6a of the sensor 6 and the earth terminal of the resistor 6c are connected, by means of a wire or wiring harness C, to an input A of an electronic control unit ECU, comprising, for example, a microprocessor and associated accessories such as memories, input/output ports, etc. The control unit ECU may be a dedicated unit, that is, solely for controlling the fuel-level indicating system, or may be an electronic unit fitted in the motor vehicle for controlling at least one other function in addition to that relating to the indication of the fuel-level in the tank.

The downstream side of the switch 4 is connected to a further input B of the unit ECU to enable the control unit to detect the switching-on/off of the internal combustion engine of the motor vehicle.

A display device such as, for example, an indicator instrument with a needle, is indicated 7 and may be located on the instrument panel of the motor-vehicle's dashboard in order to provide the user with a visual indication of the level or amount of fuel F in the tank 2. The display device 7 is controlled by the control unit ECU.

The unit ECU is arranged to "filter", by predetermined methods, the level signal provided to it by the sensor 6, and to control the display 7 dynamically on the basis of the filtered level signal. Various techniques for filtering signals by hardware or software means are known and will not therefore be described further herein.

The electronic control unit ECU is also arranged to implement a procedure for the diagnosis of operating anomalies or failures of the fuel-level indicator system.

In particular, the unit ECU is arranged to detect the impedance seen at its input A, which is connected to the level sensor 6 by means of the wire or wiring harness C, and to compare this impedance with predetermined threshold values in order to detect a short-circuit or open-circuit condition of the wire or wiring harness C.

If one of these anomaly conditions is detected, the unit ECU is arranged to position the indicator of the display 7 permanently in a predetermined position, for example, at the beginning of the associated scale, and possibly to activate an associated optical indicator, for example, the indicator for indicating that the so-called reserve level has been reached.

The unit ECU is also arranged to implement procedures for diagnosing damage or failures of the sensor 6. Such damage may be associated with small "interruptions" in the resistor 6c caused by deposits of impurities, typically of silica or sulphur, on its surface.

Deposits of this type may cause the sensor 6 to supply ohmic indications which differ from one another in terms both of resistance indication and of duration.

Diagnosis of this type is performed on the basis of time thresholds defined with the purpose of identifying the period for which the signal remains in predefined "anomalous conditions" or "states".

By way of example, on the basis of the thresholds, it is possible to define, for example, the following states:
- normal state: no malfunction detected,
- "spike" state: a "random and instantaneous" malfunction is detected,
- anomaly state: a persistent malfunction is detected,
- interruption state: a reversible inability to perform a function is detected, and
- stoppage state: an irreversible inability to perform the function is detected.

For diagnosis relating to these states, the control unit ECU is arranged to monitor the voltage applied to its input A connected to the level sensor 6, to detect and store the duration of individual periods of time for which this voltage has a value outside a predefined range, and to count and store (starting from a preset moment) the total number of these periods and the number of occasions on which the durations of the periods fall within each of a plurality of predetermined ranges of values corresponding to the above-mentioned thresholds or to the above-mentioned "states".

The control unit ECU is also arranged to implement a procedure for the diagnosis of operating anomalies or failures of the "mechanics" of the level sensor. Anomalies of this type may correspond to jamming of the floating body 6b in the associated guide structure.

For the purposes of diagnosis of this type, the unit ECU is arranged:
to acquire signals indicative of the operating condition of the internal combustion engine of the motor vehicle, for example, from a sensor 8 which detects the rate of rotation of the engine, and
to indicate a condition of failure of the sensor 6 when, for a period of time of predetermined duration, the engine of the motor vehicle is in operation and the signal of the level sensor 6 remains substantially constant.

The electronic control unit ECU may advantageously be arranged to enable leakages of fuel from the tank 2 to be detected in good time. For this purpose, the unit is arranged to identify differential phenomena of the instantaneous signal supplied by the level sensor 6 by the use of procedures for the mathematical filtering this signal.

In particular, the unit ECU is arranged to filter the instantaneous signal supplied by the level sensor 6 in a manner such as to obtain a first signal filtered in accordance with a first predetermined time constant. The unit ECU compares the signal supplied instantaneously by the level sensor 6 with this first filtered signal.

When the instantaneous signal supplied by the level sensor 6 does not equal the first filtered signal for a period of time of predetermined duration, the unit ECU starts a so-called "tracking and verification procedure". During this procedure, the unit compares the instantaneous signal supplied by the level sensor 6 with a further or second filtered signal obtained by filtering the signal of the sensor 6 in accordance with a further predetermined time constant, shorter than the first time constant.

When the instantaneous signal supplied by the sensor does not equal the second filtered signal at least once, and preferably at least twice, within a predetermined period of time, the unit ECU generates an alarm signal indicative of a fuel leakage.

The unit ECU may advantageously be arranged to generate a warning signal upon the starting of the tracking and verification procedure when, for a predetermined period of time, the instantaneous signal supplied by the level sensor does not equal, at least once and preferably twice, a reference signal obtained by filtering the signal of the level sensor 6 with an intermediate time constant between the first and second time constants. The unit ECU then starts the comparison of the instantaneous signal supplied by the level sensor 6 with the second filtered signal only after the generation of the warning signal.

Naturally, the principle of the invention remaining the same, the forms of embodiment and the details of construction may be varied widely with respect to those described and illustrated purely by way of non-limiting example, without thereby departing from the scope of the invention, as defined in the appended claims.

## Claims

1. A method for the diagnosis of operating anomalies or failures of a system for indicating the level of fuel (F) in a motor-vehicle tank (2), comprising:
an electrical sensor (6) for supplying an electrical signal indicative of the level of fuel (F) in the tank (2),
electronic processing and control means (ECU) having an input (A) connected to the sensor (6) by means of an interconnecting electrical wiring harness or wire (C), and
a display device (7) controlled by an output of the processing and control means (ECU),
the diagnosis method comprising the steps of:
- detecting, by means of the processing and control means (ECU), the impedance seen at the input (A) connected to the level sensor (6), and comparing this impedance with predetermined threshold values in order to detect, by predetermined methods, a short-circuit or open-circuit condition of the wire or wiring harness (C),
- monitoring, by means of the processing and control means (ECU), the voltage applied to the input (A) connected to the level sensor (6),
- detecting and storing the duration of the individual periods of time for which the voltage has a value outside a predefined range, and
- counting and storing, starting from a preset moment, the total number of periods, and the number of occasions on which the durations of the periods fall within each of a plurality of predetermined ranges of values.

2. A diagnosis method according to Claim 1, further comprising the steps of:
acquiring, by means of the processing and control means (ECU), signals indicative of the operation of the engine of the motor vehicle and the signal supplied by the electrical level sensor (6), and
indicating a condition of failure of the sensor (6) when, for a period of time of predetermined duration, the engine of the motor vehicle is in operation and the signal of the level sensor (6) remains substantially constant.

3. A diagnosis method according to Claim 1 or Claim 2, further comprising the steps of:
- filtering, by means of the processing and control means (ECU), the instantaneous signal supplied by the level sensor (6), so as to obtain a first signal filtered in accordance with a first predetermined time constant,
- comparing the instantaneous signal of the level sensor (6) with the first filtered signal, and
- starting a tracking and verification procedure when, for a predetermined period of time, the instantaneous signal of the level sensor (6) does not equal the first filtered signal,
during the tracking and verification procedure, the processing means (ECU) generating an alarm signal indicative of a leakage of fuel when, within a further predetermined period of time, the instantaneous signal supplied by the level sensor (6) does not equal, at least once and preferably twice, a second filtered signal, obtained by filtering the signal of the level sensor (6) with a second predetermined time constant, shorter than the first time constant.

4. A diagnosis method according to Claim 3 in which, upon the starting of the tracking and verification procedure, the processing and control means (ECU) generate a warning signal when, for a predetermined period of time, the instantaneous signal supplied by the level sensor (6) does not equal, at least once and preferably twice, a reference signal obtained by filtering the signal of the level sensor (6) in accordance with a further, intermediate time constant between the first and second time constants, the processing and control means (ECU) starting the comparison of the instantaneous signal of the level sensor (6) with the above-mentioned second filtered signal only after the generation of the warning signal.
